Europäisches Patentamt

(19) European Patent Office

Office européen des brevets

(11) Numéro de publication: **0 062 558**
**B1**

(12) **FASCICULE DE BREVET EUROPEEN**

(45) Date de publication du fascicule du brevet:
02.01.85

(51) Int. Cl.³: **F 01 D 5/26**, F 01 D 5/08

(21) Numéro de dépôt: 82400515.1

(22) Date de dépôt: 23.03.82

(54) **Perfectionnements aux étages de turbine à gaz de turboréacteurs munis de moyens de refroidissement par air du disque de la roue de la turbine.**

(30) Priorité: 07.04.81 FR 8106914

(43) Date de publication de la demande:
13.10.82 Bulletin 82/41

(45) Mention de la délivrance du brevet:
02.01.85 Bulletin 85/1

(84) Etats contractants désignés:
DE FR GB

(56) Documents cités:
CH - A - 452 998
FR - A - 1 417 600
GB - A - 1 259 750
US - A - 2 937 849
US - A - 3 037 741
US - A - 3 119 595
US - A - 3 709 631

(73) Titulaire: SOCIETE NATIONALE D'ETUDE ET DE
CONSTRUCTION DE MOTEURS D'AVIATION,
"S.N.E.C.M.A.", 2 Boulevard Victor, F-75015 Paris (FR)

(72) Inventeur: Hallinger, Claude Christian, 219, avenue de la
Libération, F-77350 Le Mee sur Seine (FR)

(74) Mandataire: Molnat, François et al, S.N.E.C.M.A. Service
des Brevets Boîte Postale 81, F-91003 Evry Cedex (FR)

BUNDESDRUCKEREI BERLIN

## Description

L'invention est relative aux étages de turbine à gaz comportant des moyens de refroidir la périphérie du disque de la roue de la turbine par de l'air insufflé en direction du flanc amont de ce disque. Elle concerne notamment les turbines de turboréacteurs d'aviation.

Dans les étages de turbine du genre précité, il existe donc deux flux gazeux qui doivent autant que possible demeurer distincts l'un de l'autre. Le premier est le flux annulaire des gaz de combustion qui entraîne les aubes de la roue. L'autre est le flux d'air qui circule autour du disque et dont le rôle est à la fois de refroidir celui-ci et d'équilibrer les pressions entre la veine et les enceintes amont et aval délimitées par la roue. Ces flux de gaz et d'air sont d'autant plus centrifugés que le régime de la turbine est élevé. Ce phénomène a une conséquence favorable qui est d'interdire la migration des gaz chauds vers le disque et une conséquence défavorable qui est de gêner la circulation des gaz de combustion par striction de la veine.

On sait que les aubes sont souvent munies de plateformes. Plus précisément, le pied d'une aube comporte trois parties; la racine qui s'engage dans un logement ménagé dans le poutour du disque, l'échasse qui surmonte la racine, enfin la plateforme qui surmonte l'échasse et qui supporte la pale. La présence de la plateforme accroît l'inertie de l'aube. Elle abaisse donc les fréquences propres de résonance de celle-ci et par conséquent la ou les vitesses critiques de la turbine. L'ensemble des plateformes d'une roue permet en outre, lorsqu'elles sont jointives, de former une couronne qui favorise la séparation des deux flux et qui délimite avec le pourtour du disque et avec les échasses des passages qui canalisent l'air de refroidissement autour des parties du disque qui sont les plus exposées à l'échauffement. Cette fonction n'est évidemment assurée que lorsque les plateformes sont jointives. Même dans ce cas, une fraction importante du flux d'air est défléchie par le flanc amont du disque et par les faces amont des échasses des aubes. Il en résulte une baisse du rendement de l'étage par une réintroduction intempestive de l'air de refroidissement centrifugé dans le flux des gaz de combustion et un manque d'efficacité du refroidissement.

On connaît d'autre part, par exemple par le brevet français 1 417 600, l'utilisation d'amortisseurs élastiques en forme de gouttières dont la fonction est d'amortir les vibrations des aubes et d'abaisser encore davantage la fréquence de ces vibrations. Chacun de ces amortisseurs est engagé dans le passage délimité par les échasses de deux aubes voisines, par les plateformes de celles-ci et par le pourtour du disque. Il occupe une partie de la section du passage, prend appui par ses bords contre le pourtour du disque et repousse par son fond lesdites plateformes. En fonctionnement, chaque amortisseur est soumis à la force centrifuge, abaisse les fréquences de résonance des aubes voisines par la traction qu'il exerce sur les échasses par l'intermédiaire des plateformes et amortit les vibrations par les frottements au contact des plateformes.

L'object de l'invention est de tirer parti de la présence de tels amortisseurs pour rendre plus efficace la circulation d'air de part et d'autre et autour du disque.

Un étage de turbine selon l'invention qui comporte:

— une roue de turbine qui comprend un disque de rotor et une pluralité d'aubes dont chacune comporte un pied à racine engagée dans un logement ménagé dans le pourtour du disque, à échasse surmontant la racine et à plateforme surmontant l'échasse et supportant la pale de l'aube,
— des moyens d'insuffler en direction du flanc amont du disque de l'air qui s'écoule d'amont en aval autour de ce disque, notamment par la pluralité de passages délimités par le pourtour du disque et par les échasses et les plateformes des pieds d'aubes,
— enfin une pluralité d'amortisseurs en matériau élastique et en forme de gouttière, dont chacun est engagé dans un passage, prend appui par ses bords contre le pourtour du disque et repousse par son fond les plateformes délimitant le passage et est conformé et dimensionné de telle sorte qu'il occupe la quasi-totalité de la section dudit passage, est caractérisé en ce que le bord amont du fond de chaque amortisseur forme une visière qui déborde le flanc amont du disque.

Avantageusement:

— la visière de chaque amortisseur est perpendiculaire au plan du disque,
—le petit bord de chaque visière est en outre recourbé vers l'axe de la roue, la visière formant ainsi une écope de forme symétrique ce qui lui permet de capter de façon optimale le champ centrifugé de l'air,
— dans le cas où l'effet de centrifugation serait relativement faible on pourrait donner à l'orifice de l'écope une incidence circonférentielle dans le sens de la rotation,
— enfin, un orifice de passage d'air est ménagé dans le bord aval de chaque amortisseur.

Les effets avantageux des dispositions de l'invention apparaîtront à la lecture de la description qui suit d'amortisseurs conformes à ladite invention, en référence aux dessins annexés dans lesquels:

La figure 1 est une vue en perspective d'une portion de roue d'un étage de turbine comportant des amortisseurs conformes à l'invention.

La figure 2 est une vue en coupe axiale d'un étage de turbine comportant des amortisseurs conformes à l'invention.

Les figures 3 et 3a sont des vues en coupe axiale montrant le montage des amortisseurs conformes à l'invention.

La figure 4 est une vue en coupe axiale montrant un moyen d'immobilisation des amortisseurs conformes à l'invention.

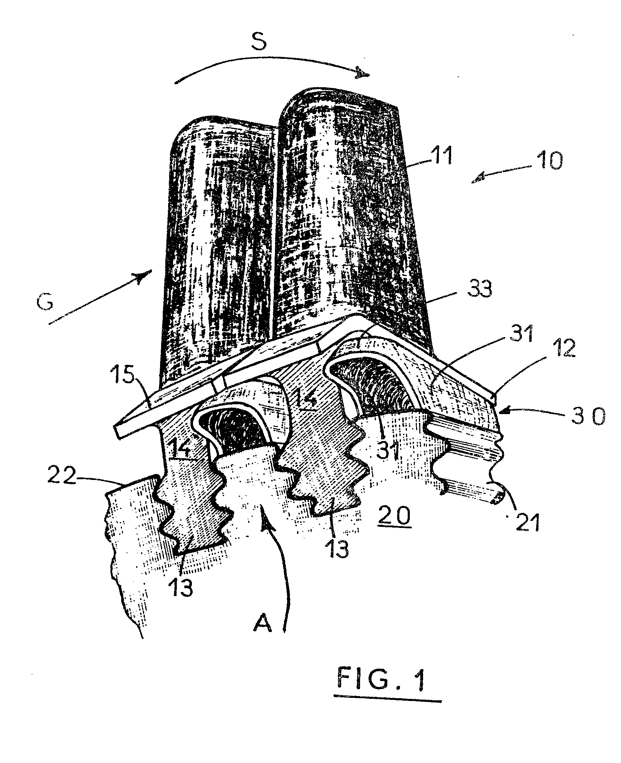

On considère d'abord la figure 1. Selon une disposition classique, chaque pale 11 appartenant à une aube 10 est supportée par un pied qui comprend une plateforme 12 (à laquelle est attachée l'ailette), une racine ou »sapin« 13 engagée dans un logement 21 de forme complémentaire ménagé dans le pourtour 22 du disque 20, enfin une échasse 14 reliant la racine et la plateforme. Le flux de gaz G entraîne les aubes dans le sens S. Le flux d'air A dont la direction générale est concentrique au flux de gaz G, circule dans le même sens que celui-ci. Il est obtenu par prélèvement d'une fraction du flux d'air délivré par le compresseur de l'étage auquel appartient la roue de turbine représentée. Ce compresseur n'est pas représenté.

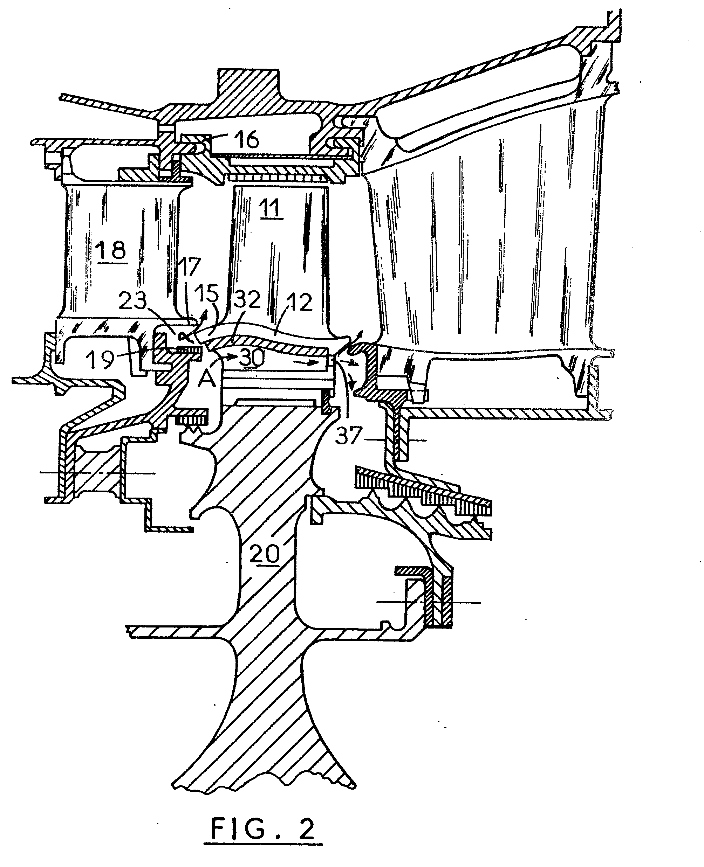

Les plateformes 12 forment avec le carter 16 (figure 2) un conduit annulaire dénommé ci-après »veine«. La partie amont (15) des plateformes est recourbée vers l'axe de la machine, de manière à se trouver radialement à l'intérieur du bord aval de la virole interne du distributeur qui précède la roue. De cette façon l'air de refroidissement de l'amont du disque sort dans la veine d'une façon axiale, ou très peu oblique. Cette disposition diminue l'effet de striction de l'air de ventilation réintroduit dans la veine.

Un amortisseur tel que 30 est inséré dans chaque passage délimité par les échasses 14 de deux pieds voisins, par les plateformes 12 de ces pieds et par le pourtour 22 du disque qui les sépare.

Deux amortisseurs 30 sont représentés sur la figure 1 mais pour plus de simplicité et de clarté on an enlevé l'aube qui devait masquer le premier de ces amortisseurs décrit ci-après.Cet amortisseur est constitué par une pièce emboutie en tôle fine. La minceur de cette tôle lui confère une certaine souplesse qui lui permet en centrifuge de mieux »s'asseoir« dans son logement et de faciliter le montage. Il est en forme de gouttière, avec deux flancs 31 approximativement parallèles reliés par un fond 32 (voir figures 2, 3, 3a et 4). Il est conformé et dimensionné de telle sorte qu'il occupe la quasi-totalité de la section du passage et que les bords des flancs 31 s'appuient au montage sur le pourtour du disque tandis que le fond 32 est au contact des plateformes 12 limitrophes.

On a déjà indiqué la fonction mécanique d'un tel amortisseur et il est inutile d'y revenir. Pour lui permettre d'assurer, conformément à l'invention, sa fonction aérodynamique, la partie amont 33 du fond 32 déborde sensiblement de flanc amont du disque 20 de façon à former une visière ou écope qui capte une fraction du flux d'air A et l'oblique à passer au contact du pourtour de disque 22 avant de déboucher sur la face aval du disque par un orifice 37 ménagé dans le bord aval de chaque amortisseur.

On peut considérer que l'amortisseur 30 comporte deux parties dont chacune joue un rôle différent. La partie composée des deux flancs 31 et du fond 32 que l'on appellera ci-après »chemise« et dont le fond 32 réalise l'étanchéité entre deux plateformes d'aubes adjacentes et la partie amont 33 dénommée visière.

La chemise de l'amortisseur 30 achemine l'air de refroidissement A, centrifugé à l'amont du disque de turbine 20, vers l'aval de ce disque. D'une part en choisissant l'étage de compresseur où le prélèvement d'air froid est fait et d'autre part en ajustant les jeux des différents labyrinthes et les sections de passage qui limitent ce prélèvement on peut déterminer la pression juste en aval du disque 20 pour qu'elle soit légèrement supérieure à celle qui se trouve dans la veine ainsi on a un faible débit de l'air A dans celle-ci, afin d'éviter les réintroductions des gaz chauds vers la partie interne du moteur. Une autre partie (la plus importante) de l'air A est destinée à ventiler la face aval du disque 20.

La visière 33 écope l'air centrifugé à l'amont du disque de turbine 20 et le force à se diriger vers l'arrière. Mais elle permet aussi de limiter la pression d'alimentation de l'air A en amont du disque 20 afin d'éviter des débits de réintroduction d'air A dans la veine.

Pour parfaire cet étanchement entre gaz chaud circulant dans la veine et air de ventilation A circulant dans les parties internes, il est proposé que, d'une part, les plateformes 17 de l'aubage fixe 18 recouvrent partiellement les parties recourbées 15 des plateformes 12 des aubes mobiles 11, et, d'autre part, que les parties recourbées 15 viennent en contact avec un labyrinthe 19 fixé sur le support intérieur de l'aubage fixe 18. En plus du labyrinthe 19 on crée une chambre 23 jouant le rôle d'une chicane. Ce dispositif évite aux éventuels débits de fuite de l'air de ventilation A de pénétrer radialement dans la veine. Ceci est obtenu par le recouvrement des plateformes qui oblige ces débits de fuite à s'écouler tangentiellement dans la veine.

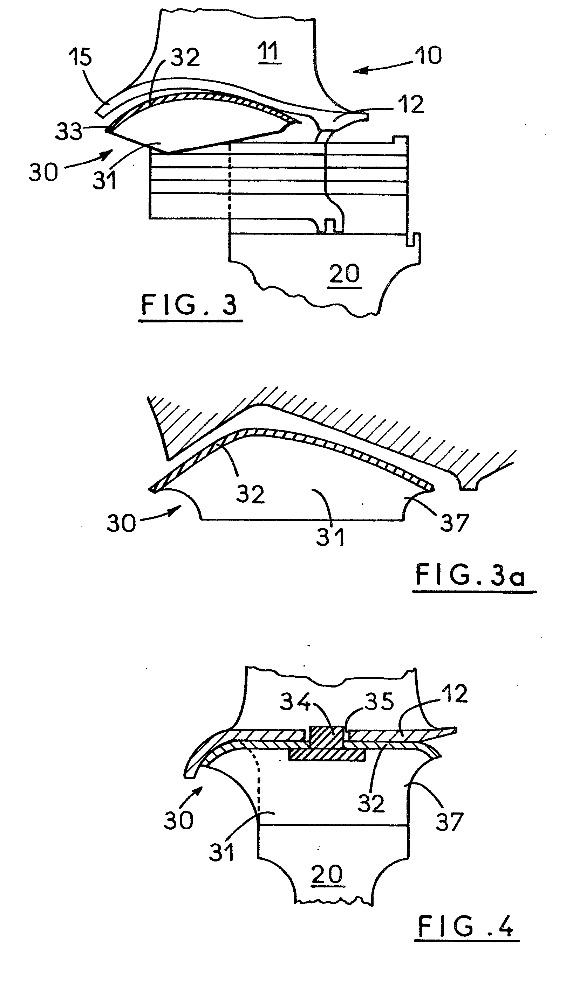

Les figures 3 et 3a montrent la mise en place d'un amortisseur 30. Cet amortisseur est introduit entre les échasses 14 et sous les plateformes 12 des aubes 10 de rotor adjacentes lorsque celles-ci ne sont pas encore complètement engagées dans le disque. L'ensemble sera ensuite progressivement poussé vers l'arrière du disque 20 jusqu'à ce que cet ensemble se trouve dans sa position prévue. Les deux pans inclinés de chacune des deux plateformes, dont l'une seulement est représentée, (figure 3a) des deux plateformes de deux aubes adjacentes »emprisonnent« l'amortisseur 30 empêchant celui-ci de glisser et de s'échapper d'un côté ou de l'autre.

La figure 4 montre une autre variante d'immobilisation axiale de l'amortisseur 30 constitué par un téton 34 brasé sur le dessus du fond 32 de la chemise, ce téton venant se loger dans une encoche 35 usinée dans la plateforme 12 de l'aube 10.

On remarquera que l'ensemble du dispositif objet de l'invention permet généralement d'éviter le perçage de la toile du disque pour alimenter en air frais la face arrière du disque, généralement du reste, avec des sources différentes (pression et température) pour le refroidissement de la face amont et de la face aval.

Bien entendu diverses modifications peuvent être apportées par l'homme de l'art aux dispositifs qui viennent d'être décrits uniquement à titre d'exemples non limitatifs, sans sortir pour cela du cadre de l'invention.

**Revendications**

1. Etage de turbine à gaz comportant:

— une roue de turbine qui comprend un disque (20) de rotor et une pluralité d'aubes (10) dont chacune comporte un pied à racine (13) engagée dans un logement (21) ménagé dans le pourtour (22) du disque (20), à échasse (14) surmontant la racine (13) et à plateforme (12) surmontant l'échasse (14) et supportant la pale (11) de l'aube,

— des moyens d'insuffler en direction du flux amont du disque (20) un flux d'air (A) destiné à s'écouler d'amont en aval autour de disque, notamment dans la pluralité de passages délimités par le pourtour du disque et par les échasses (14) et les plateformes (12) des pieds d'aubes (10),

— enfin une pluralité d'amortisseurs (30) de vibrations en alliage élastique et en forme de gouttière, dont chacun est engagé dans un passage, prend appui par ses bords contre le pourtour (22) du disque (20), repousse par son fond (32) les plateformes (12) délimitant le passage et est conformé et dimensionné de telle sorte qu'il occupe la quasi-totalité de la section dudit passage,

caractérisé en ce que le bord amont du fond (32) de chaque amortisseur (30) forme une visière (33) qui déborde le flanc amont du disque (20).

2. Etage de turbine à gaz selon la revendication 1, caractérisé en ce que la visière (33) est perpendiculaire au plan du disque (20).

3. Etage de turbine à gaz selon la revendication 2, caractérisé en ce que le bord amont de chaque visière (33) est recourbé vers l'axe de la roue, ladite visière (33) formant ainsi une écope de prélèvement d'air.

4. Etage de turbine à gaz selon la revendication 1, caractérisé en ce que les amortisseurs (30) sont immobilisés en translation axiale par deux pans inclinés des plateformes (12) de chacune des deux aubes adjacentes (10).

5. Etage de turbine à gaz selon la revendication 1, caractérisé en ce que les amortisseurs (30) sont immobilisés en translation axiale par un téton (34) brasé sur la chemise de l'amortisseur (30) qui coopère avec une encoche (35) de forme correspondante usinée dans la plateforme (12) d'une aube (10) de rotor.

6. Etage de turbine à gaz selon l'une quelconque des revendications 1 à 5, caractérisé en ce qu'un orifice (37) de passage d'air est ménagé dans le bord aval de chaque amortisseur (30).

**Patentansprüche**

1. Gasturbinenstufe

— mit einem Turbinenrad, das eine Rotorscheibe (20) sowie mehrere Schaufeln (10) mit jeweils einem Fuß umfaßt, der aus
    — einer in eine am äußeren Umfang der Rotorscheibe (20) angebrachten Aufnahme eingreifenden Wurzel (13),
    — einem diese Wurzel (13) überragenden Schaft (14)
    — und einer den Schaft (14) überragenden, das Blatt (11) der Schaufel tragenden Plattform (12)
  besteht,
— mit Mitteln zum Einblasen eines Luftstroms (A) in Richtung der hochdruckseitigen Flanke der Rotorscheibe, der insbesondere innerhalb der von dem äußeren Umfang der Rotorscheibe, den genannten Schäften (14) und den Plattformen (12) der Schaufelfüße begrenzten Durchgänge von der Hochdruckseite zur Niederdruckseite um die Rotorscheibe herumströmt,
— sowie mit einer Mehrzahl von aus einer elastischen Legierung bestehenden Vibrationsdämpfern (30), deren jeder in einen der genannten Durchgänge eingesetzt ist, wobei er sich mit seinen Rändern gegen den äußeren Umfang (22) der Rotorscheibe (20) abstützt, mit seinem Boden (32) gegen die den betreffenden Durchgang begrenzenden Plattformen (12) drückt, und der derart geformt und dimensioniert ist, daß er fast den Gesamtquerschnitt des genannten Durchgangs ausfüllt,

dadurch gekennzeichnet, daß der hochdruckseitige Rand des Bodens (32) jedes Vibrationsdämpfers (30) eine Blende (33) bildet, die über die hochdruckseitige Flanke der Rotorscheibe (20) hinausragt.

2. Gasturbinenstufe nach Anspruch 1, dadurch gekennzeichnet, daß die Blende (33) senkrecht zur Ebene der Rotorscheibe (20) angeordnet ist.

3. Gasturbinenstufe nach Anspruch 2, dadurch gekennzeichnet, daß der hochdruckseitige Rand jeder Blende (33) in Richtung auf die Achse des Turbinenrads gekrümmt ist, derart daß die Blende (33) eine kellenartige Luftentnahmevorrichtung darstellt.

4. Gasturbinenstufe nach Anspruch 1, dadurch gekennzeichnet, daß die Vibrationsdämpfer (30) durch zwei geneigte Flächen der Plattformen der beiden benachbarten Schaufeln (10) gegen axiale Verschiebung festgelegt sind.

5. Gasturbinenstufe nach Anspruch 1, dadurch gekennzeichnet, daß die Vibrationsdämpfer (30) durch einen an ihrem Boden festgelöteten Ansatz (34) gegen axiale Verschiebung festgelegt sind, der mit einer in der Plattform (12) einer Schaufel (10) des Rotors angebrachten korrespondierenden Ausnehmung (35) zusammenwirkt.

6. Gasturbinenstufe nach einem der Ansprüche 1 bis 5, dadurch gekennzeichnet, daß in dem niederdruckseitigen Rand jedes Vibrationsdämpfers eine Luftdurchlaßöffnung (37) angebracht ist.

## Claims

1. Gas turbine stage comprising:

— a turbine wheel which includes a rotor disc (20) and a plurality of blades (10) of which each incorporates a root (13) engaged in a recess (21) provided in the periphery (22) of the disc (20), with a stilt (14) surmounting the root (13) and with a platform (12) surmounting the stilt (14) and supporting the aerofoil (11) of the blade,
— means for drawing in a flow of air (A) in the direction of the upstream flow of the disc (20) intended to flow from upstream in a downstream direction around the disc, particularly into the plurality of passages defined by the periphery of the disc and by the stilts (14) and the platforms (12) of the roots of the blades (10),
— finally a plurality of vibration dampers (30) of a resilient alloy and in the form of a channel, of which each is engaged in a passage, supported at its edges against the periphery (22) of the disc (20), abutting at its base (32) the platforms (12) defining the passage and is shaped and dimensioned so that it occupies substantially the whole of the section of the said passage,

characterized in this that the upstream edge of the base (32) of each damper (30) forms a lip (33) which projects beyond the upstream face of the disc (20).

2. Gas turbine stage according to claim 1, characterized in this that the lip (33) is perpendicular to the plane of the disc (20).

3. Gas turbine stage according to claim 2, characterized in this that the upstream edge of the each lip (33) is curved towards the axis of the wheel, the said lip (33) thus forming a scoop for drawing in air.

4. Gas turbine stage according to claim 1, characterized in this that the dampers (30) are secured against axial translatory motion by two inclined flaps of the platforms (12) of each of the two adjacent blades (10).

5. Gas turbine stage according to claim 1, characterized in this that the dampers (30) are secured against axial translatory movement by a peg (34) brazed to the body of the damper (30) which cooperates with an opening (35) of corresponding shape machined in the platform (12) of a blade (10) of the rotor.

6. Gas turbine stage according to any one of claims 1 to 5, characterized in this that an orifice (37) for the passage of air is provided in the downstream edge of each damper (30).

FIG. 1

FIG. 2

FIG. 3

FIG. 3a

FIG. 4